# EUROPÄISCHE PATENTANMELDUNG

(11) **EP 2 375 273 A1**
(43) Veröffentlichungstag der Anmeldung: **12.10.2011**
(21) Anmeldenummer: 11156504.0
(22) Anmeldetag: 02.03.2011
(51) Int. Cl.: G02B 21/00, G01N 21/64

(54) **Fluoreszenzmikroskop und Verfahren zur Durchführung von Multipositionierungen in einer Screening-Applikation**

(30) Priorität: 09.04.2010 DE 102010016382
(71) Anmelder: Leica Microsystems CMS GmbH, 35578 Wetzlar (DE)
(72) Erfinder: Knebel, Werner, 76709 Kronau (DE)
(74) Vertreter: Schaumburg, Thoenes, Thurn, Landskron, Eckert

(57) **Zusammenfassung**

Ein Fluoreszenzmikroskop (20) zum Untersuchen mindestens einer Probe (42) umfasst eine Lichtquelle (22), die Anregungslicht (24) erzeugt, mehrere Detektorelemente zur Detektion von Fluoreszenzlicht (44) und mehrere Lichtleiter (41), die das Anregungslicht (24) als Teilstrahlen (30) zu der Probe (42) leiten. Das Anregungslicht (24) regt Farbstoffpartikel der Probe (42) zum Fluoreszieren an. Die Lichtleiter (41) leiten von der Probe (42) emittiertes Fluoreszenzlicht zu den Detektorelementen. Eine Fokussieroptik ist in Richtung der Teilstrahlen (30) zwischen den Lichtleitern (41) und der Probe (42) angeordnet. Jedem Lichtleiter (41) ist mindestens ein Detektorelement zugeordnet.

## Beschreibung

Die Erfindung betrifft ein Fluoreszenzmikroskop zum Untersuchen mindestens einer Probe und ein Verfahren zum Untersuchen mindestens einer Probe mit Hilfe eines Fluoreszenzmikroskops.

Es ist bekannt, zum Untersuchen einer Probe, insbesondere einem biologischen Objekt, wie einem Zebrafisch, einem Zebrafisch-Ei, Medaka, Drosophila-Larven und vielem mehr, fluoreszierende Farbstoffe in die Probe einzubringen, so dass die Farbstoffpartikel mit den Probenmolekülen Verbindungen eingehen. Insbesondere können fluoreszierende Proteine durch Fusion mit Proteinen einer Zelle der Probe diese Proteine der Zelle markieren. Zur Herstellung derartiger Fusionsproteine wird die DNA des zu untersuchenden Proteins mit der DNA des fluoreszierenden Proteins verbunden und in eine Form gebracht, die von der Zelle aufgenommen werden kann, so dass sie das Fusionsprotein selbstständig herstellt. In vielen Anwendungs-Fällen wird das zu untersuchend Protein noch an die korrekte Stelle in der Zelle transportiert. Das fluoreszierende Protein kann mit Hilfe der Fluoreszenzmikroskopie Aufschluss über die zeitliche und räumliche Lokalisation des Zielproteins in der Zelle geben. Als fluoreszierende Proteine sind beispielhaft GFP, PA-GFP, Kaede, Kindling, Dronpa oder PS-CFP genannt.

Aus der US 2006/0257993 A1 ist ein mikroskopisches Untersuchungsverfahren bekannt, bei dem Licht zum Beleuchten einer zu untersuchenden Probe über ein Bündel von Lichtleitfasern zur Probe geführt wird. Die einzelnen Fasern können vor dem Auftreffen des Lichts auf die Probe von dem Bündel separiert werden, so dass zu jeder Faser ein Lichtfokus auf der Probe entsteht.

US 6,015,674 A offenbart ein Verfahren zum gleichzeitigen Untersuchen von mehreren Proben, bei dem Beleuchtungslicht mit Hilfe eines Multiplexers in einzelne Teillichtstrahlen aufgespaltet wird und bei dem mit Hilfe der Teillichtstrahlen die Proben beleuchtet werden.

WO 03/064990 A2 zeigt ein Deckelelement zum Abdecken von zu untersuchenden mikroskopischen Proben. Das Deckelelement überdeckt mehrere Probenbehälter und ist mit einer Lichtleitfaser gekoppelt, was das Untersuchen der Proben bei geschlossenem Deckelelement ermöglicht.

US 4,262,693 offenbart ein Mikroskop, bei dem das Beleuchtungslicht mit Hilfe einer ersten Lichtleitfaser zu der Probe hin geführt wird und bei dem von der Probe ausgehendes Fluoreszenzlicht mit Hilfe einer zweiten Lichtleitfaser hin zu einem Detektor geführt wird.

DE 198 46 928 A1 zeigt ein mikroskopisches Abbildungssystem mit einem Zylinderlinsenarray, bei dem ein Beleuchtungslichtstrahl zunächst durch eine Lichtleitfaser geführt und dann mit Hilfe des Linsenarrays in mehrere Teillichtstrahlen aufgespaltet wird. Die Teillichtstrahlen werden zur Anregung von Fluoreszenz auf entsprechende Proben gelenkt. Von den Proben ausgehende Fluoreszenzlichtstrahlung wird über das Linsenarray zu einem Detektor gelenkt.

Es ist Aufgabe der vorliegenden Erfindung, ein Fluoreszenzmikroskop und ein Verfahren zum Untersuchen mindestens einer Probe zu schaffen, das ein besonders schnelles Untersuchen einer oder mehrer Proben ermöglicht.

Die Erfindung zeichnet sich gemäß einem ersten Aspekt dadurch aus, dass das Fluoreszenzmikroskop eine Lichtquelle, mehrere Detektorelemente und mehrere Lichtleiter hat, wobei jedem Lichtleiter mindestens ein Detektorelement zugeordnet ist. Die Lichtquelle erzeugt Anregungslicht, das die Lichtleiter als Teilstrahlen zu der Probe leiten. Das Anregungslicht regt Farbstoffpartikel der Probe zum Fluoreszieren an. Zusätzlich zu dem Leiten des Anregungslichts hin zu der Probe leiten die Lichtfasern das von der Probe emittierte Fluoreszenzlicht zu den Detektorelementen, die das Fluoreszenzlicht detektieren. Eine Fokussieroptik ist in Richtung der Teilstrahlen zwischen den Leitlichtfasern und der Probe angeordnet.

Die Lichtleiter und die Fokussieroptik ermöglichen, das Anregungslicht in der Probe zu mehreren Foki zu fokussieren, beispielsweise kann zu jedem Lichtleiter und jedem Teilstrahl ein Fokus erzeugt werden. Dadurch können unterschiedliche Bereiche der Probe gleichzeitig untersucht werden. Dies trägt dazu bei, dass die Probe besonders schnell untersucht werden kann. Alternativ dazu können die Lichtleiter auch so angeordnet sein, dass mit deren Hilfe die Foki in unterschiedlichen Proben erzeugt werden, so dass gleichzeitig mehrere Proben untersucht werden können. Dies trägt dazu bei, dass mehrere Proben besonders schnell untersucht werden können. Somit kann durch die unterschiedlichen positionierten Lichtleiter systematisch eine große Anzahl von Proben untersucht werden, was auch als Multipositionierungen mit Hilfe des Fluoreszenzmikroskops in einer Screening-Applikation bezeichnet werden kann. Die Lichtleiter umfassen beispielsweise Lichtleitfasern.

In einer vorteilhaften Ausgestaltung umfasst das Fluoreszenzmikroskop mehrere optische Elemente, die einen ersten Schaltzustand und einen zweiten Schaltzustand haben. Die optischen Elemente im ersten Schaltzustand leiten die Teilstrahlen zu den Lichtleitern. Die optischen Elemente im zweiten Schaltzustand leiten die Teilstrahlen nicht zu den Lichtleitern. Beispielsweise können die optischen Elemente im zweiten Schaltzustand die Teilstrahlen zwar reflektieren jedoch nicht derart, dass diese hin zu der Probe geleitet werden, sondern beispielsweise hin zu einer Lichtfalle. Alternativ dazu können die optischen Elemente im zweiten Schaltzustand das auf sie treffende Licht absorbieren. Auf diese Weisen ermöglichen die schaltbaren optischen Elemente das Anregungslicht lediglich in einen Teil der Lichtleiter einzukoppeln und so lediglich einen Teil des Anregungslichts hin zu der Probe zu leiten. Dies trägt dazu bei, dass die Anzahl der erzeugten Foki zum Untersuchen der Probe beliebig wählbar ist. Neben der Anzahl der Foki ist auch die Form der zu untersuchenden Bereiche beliebig wählbar, indem zu den Bereichen korrespondierend in mehrere Lichtleiter die Teilstrahlen eingekoppelt werden. In anderen Worten können beliebige Beleuchtungsmuster durch Schalten entsprechender optischer Elemente und dem damit verbundenen Erzeugen entsprechender Teilstrahlen erzeugt werden.

Die Erfindung zeichnet sich gemäß einem zweiten Aspekt dadurch aus, dass das Anregungslicht erzeugt wird, dass das Anregungslicht als Teilstrahlen über die Lichtleiter zu der Probe geleitet wird und dass jedem Lichtleiter mindestens ein Detektorelement zugeordnet wird.

In einer vorteilhaften Ausgestaltung werden nur die Detektorelemente ausgelesen und/oder nur die Signale der Detektorelemente ausgewertet, auf die Foki der Probe abgebildet werden. Dieses selektive Auslesen einzelner Pixelregionen der Detektorelemente kann dazu beitragen, die Geschwindigkeit beim Untersuchen der Probe zu erhöhen.

In diesem Zusammenhang ist es besonders vorteilhaft, wenn eine Konfokalität des Fluoreszenzmikroskops eingestellt wird, indem eine Anzahl der Detektorelemente eingestellt wird, die je Teillichtstrahl ausgelesen oder ausgewertet werden. Beispielsweise kann eine besonders hohe Konfokalität eingestellt werden, indem lediglich eines der Detektorelemente ausgelesen wird, auf dessen sensitive Fläche der Fokus eines der Teilstrahlen abgebildet wird. Im Gegensatz dazu kann eine niedrige Konfokalität eingestellt werden, indem zu einem abgebildeten Fokus eines Teillichtstrahls beispielsweise 9 oder 16 Detektorelemente ausgelesen werden.

In einer weiteren vorteilhaften Ausgestaltung wird ein Bild der Probe aufgenommen und auf einer Anzeigeneinheit angezeigt. Ein Benutzer kann mit Hilfe einer Benutzereingabe einen Teilbereich des Bildes auswählen. Das Anregungslicht wird nachfolgend derart in die Teilstrahlen aufgespaltet, dass Bereiche der Probe, die zu den ausgewählten Teilbereichen der Probe korrespondieren, mit Hilfe der Foki der Teilstrahlen ausgeleuchtet werden. Dies trägt auf besonders intuitive Weise dazu bei, dass der Benutzer die Anzahl der Foki frei wählen kann und beliebige Bereiche der Probe insbesondere unterschiedliche Bereiche der Probe gleichzeitig untersuchen kann.

Falls mehrere Proben gleichzeitig untersucht werden sollen, ist es besonders vorteilhaft, wenn zu jeder Probe mindestens ein Lichtleiter und damit ein Teilstrahl geführt werden und der entsprechende Teilstrahl in der Probe fokussiert wird. Das Bewegen der Lichtleiter über die Probe bzw. Proben ermöglicht ein Erhöhen der Auflösung des Fluoreszenzmikroskops, insbesondere wenn eine Wegstrecke, um die die Lichtleiter bewegt werden, kleiner ist als der Abstand zweier benachbarter Foki bei nicht bewegtem Lichtleiter. Dies ist insbesondere vorteilhaft, wenn durch die Foki auf der Probe ein regelmäßiges Beleuchtungsmuster erzeugt wird. Alternativ zu dem regelmäßigen Beleuchtungsmuster kann auch ein zufällig gewähltes Beleuchtungsmuster auf der bzw. den Proben erzeugt werden.

Ausführungsbeispiele der Erfindung sind nachfolgend anhand von schematischen Zeichnungen näher erläutert.

Es zeigen:
- Figur 1: ein Fluoreszenzmikroskop,
- Figur 2: eine Ausführungsform eines Faserbündels,
- Figur 3: eine Seitenansicht eines Mehrfachprobenhalters,
- Figur 4: ein Bild einer Probe auf einer Anzeigeneinheit,
- Figur 5: eine Vorderansicht eines optischen Stellelements in einem ersten Betriebszustand,
- Figur 6: ein Probenhalter mit einer Probe und einem ersten Beleuchtungsmuster,
- Figur 7: eine Vorderansicht des optischen Stellelements in einem zweiten Betriebszustand,
- Figur 8: der Probenhalter mit der Probe und einem zweiten Beleuchtungsmuster,
- Figur 9: eine Vorderansicht des optischen Stellelements in einem dritten Betriebszustand,
- Figur 10: der Probenhalter mit der Probe und einem dritten Beleuchtungsmuster,
- Figur 11: der Probenhalter mit der Probe und einem vierten Beleuchtungsmuster,
- Figur 12: eine Vorderansicht des optischen Stellelements in einem vierten Betriebszustand,
- Figur 13: der Probenhalter mit der Probe in einem fünften Beleuchtungsmuster,
- Figur 14: ein Ablaufdiagramm eines Programms zum Untersuchen der Probe.

Elemente gleicher Konstruktion oder Funktion sind figurenübergreifend mit den gleichen Bezugszeichen gekennzeichnet.

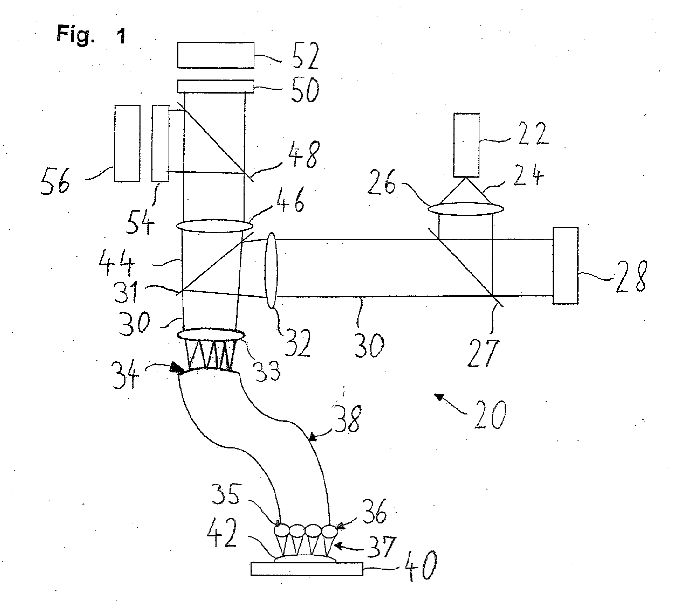

Figur 1 zeigt ein Fluoreszenzmikroskop 20. Das Fluoreszenzmikroskop 20 umfasst eine Lichtquelle 22, die Anregungslicht 24 erzeugt. Die Lichtquelle 22 ist eine breitbandige Laserlichtquelle, insbesondere ein Weißlichtlaser. Alternativ dazu kann die Lichtquelle 22 auch einen einfachen Laser, mehrere Laser und/oder eine andere geeignete Lichtquelle, beispielsweise eine Quecksilberdampflampe, umfassen. Eine erste Kollimationslinse 26 kollimiert das Anregungslicht 24, welches nachfolgend mit Hilfe eines ersten Strahlteilers 27 hin zu einem optischen Stellelement 28 geleitet ist. Der Strahlteiler 27 kann als Polarisationsteiler ausgebildet sein und nur Anregungslicht 24 einer vorgegebenen Polarisation hin zu dem optischen Stellelement 28 leiten. Das optische Stellelement 28 umfasst beispielsweise mehrere Spiegel, insbesondere ein oder mehrere Digital Mirror Devices (DMD). Alternativ dazu kann das optische Stellelement 28 durch ein oder mehrere LCoS-Arrays (Liquid Crystal on Silicon) gebildet sein. Trifft ein Lichtstrahl auf ein LCoS-Array und wird von diesem reflektiert, so ist die Polarisation des reflektierten Lichts gegenüber der des einfallenden Lichtstrahls gedreht. In diesem Zusammenhang ist es besonders vorteilhaft, wenn der Strahlteiler 27 als Polarisationsteiler ausgebildet ist. Alternativ zu dem DMD oder dem LCoS-Array kann das optische Stellelement 28 auch schaltbare diffraktive Elemente umfassen.

Das optische Stellelement 28 teilt das Anregungslicht 24 zumindest teilweise in Teilstrahlen 30 auf, die den ersten Strahlteiler 27 hin zu einer ersten Linse 32 durchdringen. Die erste Linse 32 bildet die Teilstrahlen 30 auf einen zweiten Strahlteiler 31 ab, der die Teilstrahlen 30 hin zu einer Einkoppellinse 33 ablenkt. Die Einkoppellinse 33 ist vorzugsweise eine einfache fokussierende Linse. Alternativ dazu kann die Einkoppellinse 33 aus mehreren Linsen gebildet sein. Die Einkoppellinse 33 fokussiert die Teilstrahlen 30 auf ein erstes Faserende 34 eines Faserbündels 38 und koppelt sie dadurch in das Faserbündel 38 ein. Das Faserbündel 38 leitet die Teilstrahlen 30 hin zu einem zweiten Faserende 35 des Faserbündels 38, an dem die Teilstrahlen 30 austreten und auf ein Mikrolinsensystem 36 treffen, das in diesem Zusammenhang auch als Fokussieroptik bezeichnet werden kann. Die Fokussieroptik fokussiert die einzelnen Teilstrahlen 30 zu Foki auf oder in einer Probe 42, die von einem Probenhalter 40 gehalten ist.

Das Anregungslicht 24 regt Farbstoffe der Probe 42 zum Fluoreszieren an. Das von der Probe 42 emittierte Fluoreszenzlicht 44 wird mit Hilfe des Mikrolinsensystems 36 in das Faserbündel 38 eingekoppelt und mit Hilfe des Faserbündels 38 über die Einkoppellinse 33 und den zweiten Strahlteiler 31 hin zu einer zweiten Kollimationslinse 46 geleitet, die das Fluoreszenzlicht 44 kollimiert und auf einen dritten Strahlteiler 48 lenkt. Der dritte Strahlteiler 48 lässt Anteile des Fluoreszenzlichts 44 über einen ersten Farbfilter 50 hin zu einem ersten Detektor 52 durch und reflektiert andere Anteile des Fluoreszenzlicht 44 hin zu einem zweiten Farbfilter 54, der vorgegebene Wellenlängen des Fluoreszenzlichts hin zu einem zweiten Detektor 56 durchlässt. Alternativ dazu kann nur ein Detektor 52, 56 oder es können auch mehrere Detektoren 52, 56 vorgesehen sein. Jeder der Detektoren 52, 56 umfasst mehrere Detektorelemente. Die Detektorelemente sind vorzugsweise matrixförmig angeordnet und bilden insgesamt einen Flächendetektor. Die Detektoren 52, 56 umfassen als Detektorelemente CMOS-Detektoren (Complementary Metal Oxide Semiconductor). Alternativ dazu können als Detektorelemente APD-Arrays (Avalanche Photodiode), vollverarmte Silizium-Detektoren oder DEPFET-Arrays (Depleted Field Effect Transistor) verwendet werden.

Das der Probe 42 zugewandte zweite Faserende 35 des Faserbündels 38 kann von einer Haltevorrichtung gehalten sein. Eine derartige Haltevorrichtung ist vielseitig nutzbar. Neben dem zweiten Faserende 35 des Faserbündels 38 können in der Haltevorrichtung beispielsweise auch Baueinheiten zum Aufbringen, Manipulieren oder Entfernen der Probe 42 vorgesehen sein. Diese Baueinheiten umfassen beispielsweise Pipetten, Pinzetten, Skalpelle etc. Die Haltevorrichtung kann beispielsweise mit einem Roboterarm gekoppelt sein und von diesem bewegt werden.

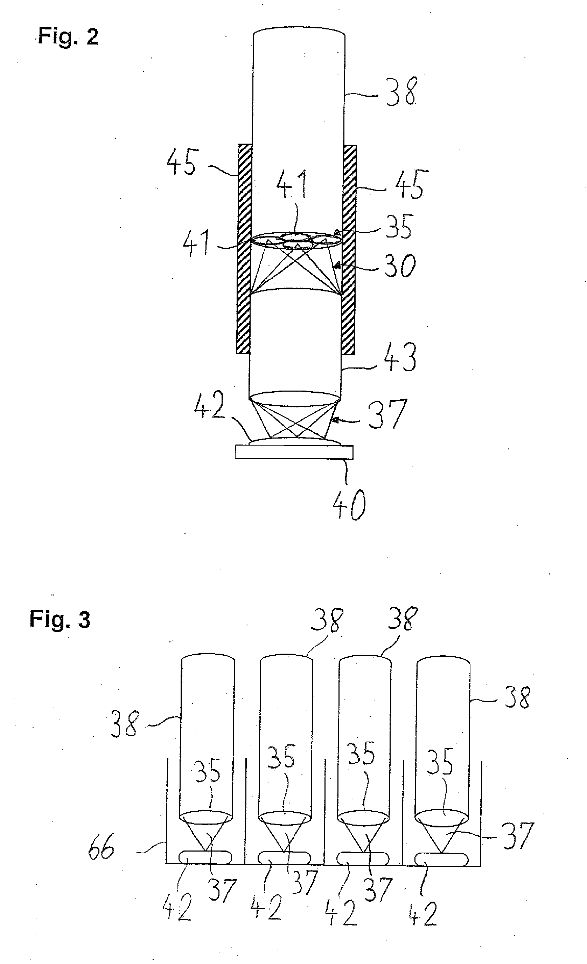

Figur 2 zeigt eine Detailansicht des zweiten Faserendes 35 des Faserbündels 38. Das Faserbündel 38 umfasst mehrere Lichtleiter, insbesondere Lichtleitfasern 41, wobei zur besseren Darstellbarkeit lediglich vier Lichtleitfasern 41 dargestellt sind. Alternativ dazu kann das Faserbündel 38 auch mehr oder weniger Lichtleitfasern 41 umfassen. Im Gegensatz zu dem in Figur 1 gezeigten Ausführungsbeispiel ist bei dem in Figur 2 gezeigten Ausführungsbeispiel das Mikrolinsensystem 36 durch ein Objektiv 43 ersetzt, das die aus dem Faserbündel 38 austretenden Teilstrahlen 30 auf die Probe 42 fokussiert. Das Objektiv 43 kann in diesem Zusammenhang auch als Fokussieroptik bezeichnet werden. Das Objektiv 43 ist über ein Koppelstück 45 mit dem Faserbündel 38 gekoppelt.

Jede der Lichtleitfasern 41 ist mindestens einem Detektorelement zugeordnet. Das bedeutet, dass bekannt ist, welches oder welche Detektorelemente Fluoreszenzlicht 44 detektieren, das von einer bestimmten der Lichtleitfasern 41 zu den entsprechenden Detektorelementen geleitet wird. Beispielsweise werden einer der Lichtleitfasern 41 neun in einer rechteckigen Form angeordnete Detektorelemente zugeordnet. Immer wenn in die entsprechende Lichtleitfaser 41 der entsprechende Teilstrahl 30 eingekoppelt wird, werden die neun der entsprechenden Lichtleitfaser 41 zugeordneten Detektorelemente ausgelesen und deren Daten ausgewertet.

Die Anzahl der Detektorelemente, die einer der Lichtleitfasern 41 zugeordnet sind, ist ein Maß für die Konfokalität des Fluoreszenzmikroskops 20. Je mehr Detektorelemente einer der Lichtleitfasern 41 zugeordnet sind, desto geringer ist die Konfokalität, und je weniger Detektorelemente einer der Lichtleitfasern 41 zugeordnet sind, desto größer ist die Konfokalität. Das Verändern der Anzahl von einer der Lichtleitfasern 41 zugeordneten Detektorelementen entspricht somit einem Verändern einer variablen Lochblende vor dem entsprechenden Detektor 52, 56.

Das optische Stellelement 28 ermöglicht, in beliebige der Lichtleitfasern 41 das Anregungslicht 24 in Form der Teilstrahlen 30 einzukoppeln. Dadurch können beliebige Bereiche der Probe 42 beleuchtet und die dort angeordneten Farbstoffpartikel zum Fluoreszieren angeregt werden. In anderen Worten können beliebige Regionen, insbesondere Regions Of Interest (ROI) untersucht werden. Die Detektorelemente können dann korrespondierend zur Beleuchtung der Probe 42 ausgelesen werden, wodurch ein besonders schnelles Auslesen, also eine hohe Framerate, erzielt werden kann.

Das zweite Faserende 35 des Faserbündels 38 ist beweglich und kann zu der Probe 42 geführt werden. Die Probe 42 muss daher nicht bewegt werden. Beim Bewegen des Faserbündels 38 wird eine deutlich geringere Masse bewegt, als beim Bewegen des Probenhalters 40, der beispielsweise einen Probentisch umfasst. Dies ist insbesondere vorteilhaft, wenn die Probe 42 sehr empfindlich ist und beispielsweise nicht erschüttert werden soll, insbesondere, wenn die Probe 42 über einen längeren Zeitraum in ihrer Entwicklung beobachtet werden soll.

Figur 3 zeigt einen Mehrfachprobenhalter 66, der mehrere einzelne Gefache umfasst. In jedem der Gefache ist eine Probe 42 angeordnet. In jedes der Gefache ragt ein Faserbündel 38. Alternativ dazu kann für jedes der Gefache nur eine Lichtleitfaser 41 vorgesehen sein. Alle Faserbündel 38 sind Bestandteile des Fluoreszenzmikroskops 20. Die zweiten Faserenden 35 der Faserbündel 38 sind derart voneinander beabstandet, dass sie als Gesamtbündel in den Mehrfachprobenhalter 66 einführbar sind, was das gleichzeitige Untersuchen mehrerer Proben 42 ermöglicht. Die Anordnung der zweiten Faserenden 38 und damit deren relative Position zueinander ist durch eine nicht dargestellte Haltevorrichtung zum Halten der Faserbündel 38 vorgegeben. Der Mehrfachprobenhalter 66 kann auch als Multi-Wellplate bezeichnet werden.

Das gleichzeitige Untersuchen mehrerer Proben 42 ermöglicht einen besonders hohen Durchsatz beim Untersuchen einer großen Anzahl von Proben 42. Dadurch können beispielsweise Veränderungen in einem Organismus untersucht werden, nachdem ein Einflussparameter verändert wurde. Der Parameter ist repräsentativ für eine physikalische oder biologische, insbesondere genetische, Bedingung und kann beispielsweise die Temperatur, der PH-Gehalt, die Giftstoff-Konzentration, verwendete Medikamente und/oder deren Konzentration und/oder die Wellenlänge des Anregungslichts sein.

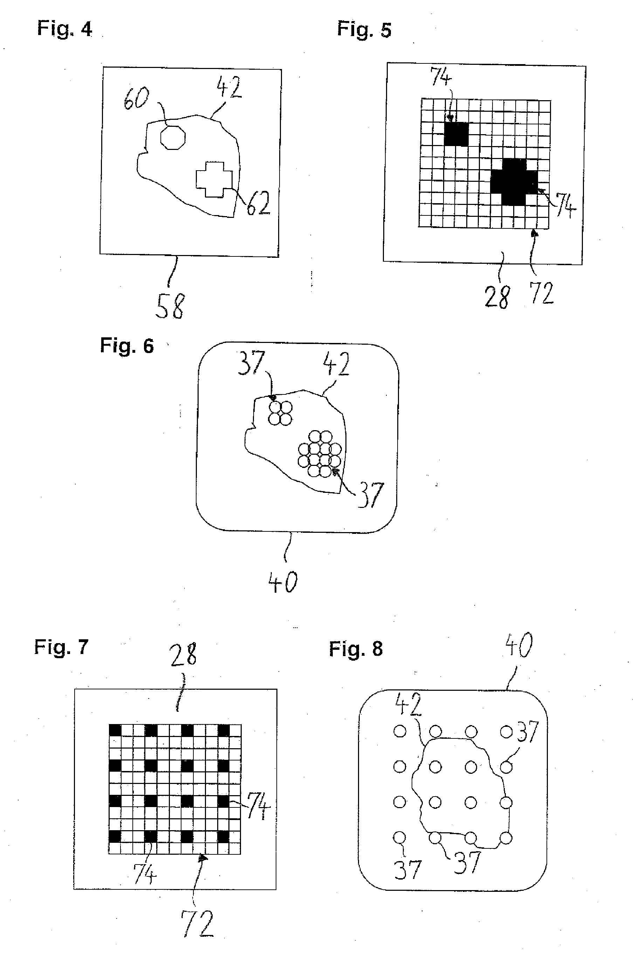

Figur 4 zeigt eine Anzeigeeinheit 58, die ein Bild der Probe 42 zeigt. Ein Benutzer des Fluoreszenzmikroskops 20 hat die Möglichkeit, beliebig geformte und beliebig viele Teilbereiche des Bildes zum Untersuchen der Probe 42 auszuwählen. Im beispielhaft in Figur 2 gezeigten Fall hat der Benutzer einen ersten Teilbereich 60, der sechseckförmig ist, und einen zweiten Teilbereich 62, der kreuzförmig ausgebildet ist, ausgewählt.

Figur 5 zeigt eine Vorderansicht des optischen Stellelements 28 in einem ersten Betriebszustand. Das optische Stellelement 28 umfasst mehrere optische Elemente 72. Die optischen Elemente 72 repräsentieren die Spiegel des DMD, die einzelnen Chips des LCoS-Arrays bzw. die schaltbaren diffraktiven Elemente. Die optischen Elemente 72 haben einen ersten Schaltzustand, in dem sie aktiv sind, und einen zweiten Schaltzustand, in dem sie nicht aktiv sind. Einige der optischen Elemente 72 sind aktiv und werden nachfolgend als aktive optische Elemente 74 bezeichnet. Die aktiven optischen Elemente 74 sind in den Figuren schwarz gezeichnet. Die aktiven optischen Elemente 74 befinden sich im ersten Schaltzustand und zeichnen sich dadurch aus, dass sie die Teilstrahlen 30 aus dem Anregungslicht 24 bilden und hin zu dem ersten Strahlteiler 27 reflektieren. Die optischen Elemente 72, die nicht im ersten Schaltzustand sind, sind im zweiten Schaltzustand, sind nicht aktiv und lenken die Teilstrahlen 30 nicht zum Erzeugen von Foki 37 auf der Probe 24 ab, sondern absorbieren das Anregungslicht 24 oder lenken es hin zu einer Strahlfalle. In dem ersten Betriebszustand korrespondiert die Auswahl der aktiven optischen Elemente 74 zu den ausgewählten Teilbereichen 60, 62 gemäß Figur 4.

Figur 6 zeigt eine Draufsicht auf die Probe 42, die in dem Probenhalter 40 gehalten ist, mit einem ersten Beleuchtungsmuster, das zu dem ersten Betriebszustand des optischen Stellelements 28 zugehörig ist. Ferner sind mehrere Foki 37 gezeigt, die Bereiche der Probe 42, die zu den ausgewählten Teilbereichen 60, 62 des Bildes der Probe 42 und zu den aktiven optischen Elementen 74 korrespondieren, ausleuchten. Die Foki 37 sind aus Gründen der besseren Darstellbarkeit deutlich größer dargestellt, als sie es in Wirklichkeit sind. Die Foki können auch im Inneren der Probe 42 liegen. Die Foki 37 entstehen durch Fokussieren der über das Faserbündel 38 geleiteten Teilstrahlen 30 des Anregungslichts 24. Die Anzahl der Foki 37 und die Form der mit Hilfe der Foki 73 beleuchteten Bereiche werden über die aktiven optischen Elemente 74 eingestellt.

Bei den dargestellten Ausführungsbeispielen ist für jede Lichtleitfaser 41 ein optisches Element 72 vorgesehen, über das einer der Teilstrahlen 30 in die entsprechende Lichtleitfaser 41 eingekoppelt werden kann. Alternativ dazu können für jede Lichtleitfaser 41 auch mehrere optische Elemente 72 vorgesehen sein, so dass mehrere Teilstrahlen 30 in eine der Lichtleitfasern 41 eingekoppelt werden. Alternativ dazu können für jedes der optischen Elemente 72 auch mehrere Lichtleitfasern 41 vorgesehen sein, so dass einer der Teilstrahlen 30 in mehrere der Lichtleitfasern 41 eingekoppelt wird. Ferner ist das optische Stellelement 28 bei den gezeigten Ausführungsbeispielen eine einzige Einheit, die über eine Steuereinheit gesteuert wird. Alternativ dazu kann das optische Stellelement 28 mehrere Untereinheiten umfassen, die einzeln ansteuerbar sind, beispielsweise mit je einer Steuereinheit.

Figur 7 zeigt das optische Stellelement 28 in einem zweiten Betriebszustand. In dem zweiten Betriebszustand sind die aktiven optischen Elemente 74 in regelmäßigen Abständen zueinander verteilt.

Figur 8 zeigt ein zu dem zweiten Betriebszustand korrespondierendes zweites Beleuchtungsmuster auf der Probe 42.

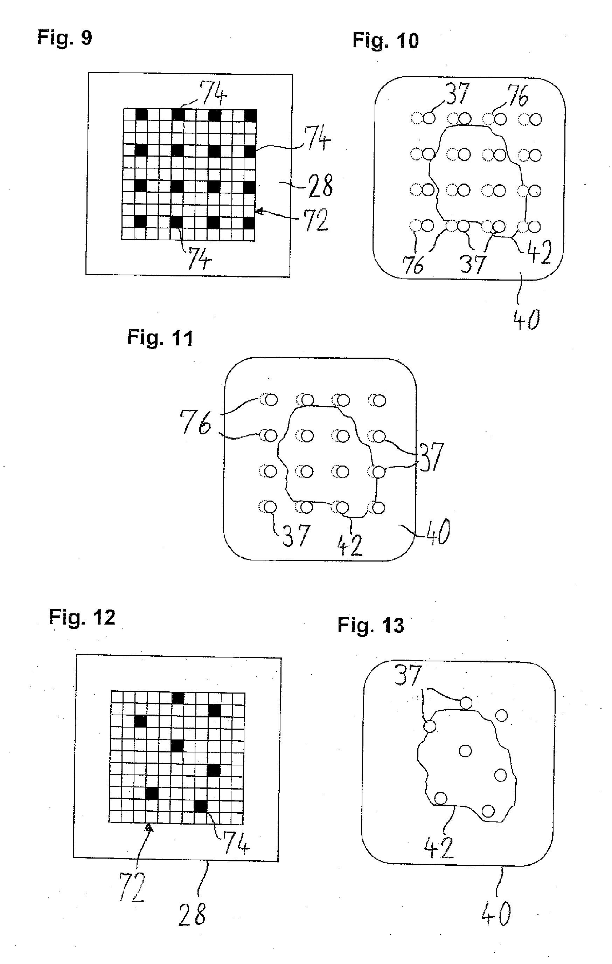

Figur 9 zeigt das optische Stellelement 28 in einem dritten Betriebszustand. In dem dritten Betriebszustand sind die aktiven optischen Elemente 74 auch in regelmäßigen Abständen zueinander verteilt, allerdings gegenüber dem in Figur 7 gezeigten zweiten Betriebszustand um je ein optisches Element 72 nach rechts versetzt.

Figur 10 zeigt das zu dem dritten Betriebszustand korrespondierende Beleuchtungsmuster auf der Probe 42, wobei bereits im ersten Betriebszustand beleuchtete Bereiche 76 mit gestrichelten Linien angedeutet sind. Ein Durchlaufen der beiden und vieler weiterer Schaltzustände und entsprechender, sich ergänzender Beleuchtungsmuster ermöglicht ein optisches Abtasten der gesamten Probe 42.

Figur 11 zeigt ein viertes Beleuchtungsmuster, das gegenüber dem in Figur 8 gezeigten ersten Beleuchtungsmuster um eine vorgegebene Einheit verschoben ist, was durch entsprechendes Verschieben des Faserbündels 38 erreicht wird. Alternativ zu dem Faserbündel 38 kann zum Erhöhen der Auflösung auch die Probe 42 verschoben werden. Bei ortsfest gehaltenem Faserbündel 38 ist die Auflösung des Fluoreszenzmikroskops unter anderem durch den Abstand und die Größe der einzelnen optischen Elemente 74 und die dazu korrespondierenden Foki 37 auf der Probe 42 gegeben. Die Auflösung kann einfach erhöht werden, indem das Faserbündel 38 von einer Aufnahme zur nächsten verschoben wird, wobei die Einheit, um die verschoben wird, vorzugsweise kleiner ist, als der Abstand zweier nebeneinander liegender Foki 37, wenn das Faserbündel 38 nicht verschoben wird und nur die Schaltzustände geändert werden.

Figur 12 zeigt das optische Stellelement 28 in einem vierten Betriebszustand. In dem vierten Betriebszustand sind die aktiven optischen Elemente 74 in zufällig gewählten Abständen zueinander verteilt.

Figur 13 zeigt ein zu dem vierten Betriebszustand korrespondierendes und damit zufällig gewähltes fünftes Beleuchtungsmuster auf der Probe 42. Bei Verwenden des zufällig gewählten Beleuchtungsmusters werden zum Aufnehmen des Bildes der Probe nachfolgend weitere zufällig gewählte Beleuchtungsmuster erzeugt, wobei vorzugsweise darauf geachtet wird, dass nicht mehrmals hintereinander die Foki 37 an selber Stelle erzeugt werden und/oder dass die Foki 37 aufeinander folgender Beleuchtungsmuster nicht direkt nebeneinander liegen, was detektorseitig die Trennung der Fluoreszenzsignale unterschiedlicher Beleuchtungsfoki vereinfacht. Vorzugsweise werden für die Detektion von Fluoreszenzlicht aus einem der Beleuchtungsfoki 37 mehrere Detektionspixel der Detektoren 52, 56 verwendet. Dies vereinfacht die Zuordnung der einzelnen optischen Elemente 72 und der Beleuchtungseinheit zu den Detektoren 52, 56.

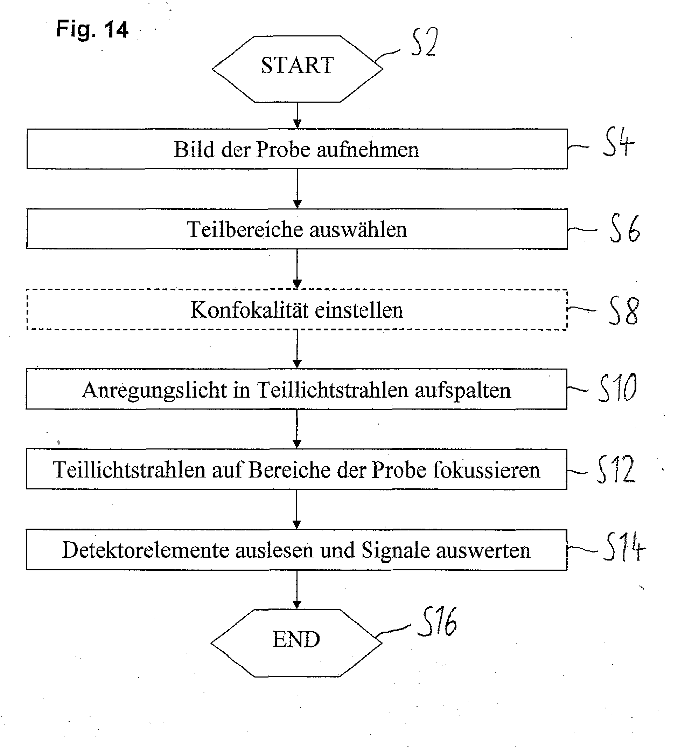

Figur 14 zeigt ein Ablaufdiagramm eines Programms zum Untersuchen der Probe 24. Die Probe 24 wird insbesondere mit Hilfe des Fluoreszenzmikroskops 20 untersucht. Das Programm ist beispielsweise auf einer Speichereinheit des Fluoreszenzmikroskops 20 gespeichert und dient dazu, vorzugsweise möglichst schnell eine oder mehrere Proben zu untersuchen.

Das Programm wird in einem Schritt S2 gestartet, beispielsweise zeitnah einer Inbetriebnahme des Fluoreszenzmikroskops 20.

In einem Schritt S4 wird das Bild der Probe 42 aufgenommen, beispielsweise durch gleichzeitiges Beleuchten aller Lichtleitfasern 41 und einer Detektion des gesamten hin zu den Lichtleitfasern 41 abgestrahlten Fluoreszenzlicht 44 über eine längere Zeitdauer. Das entspricht einer Wide-Field-Aufnahme. Alternativ dazu kann das Bild der gesamten Probe 42 durch systematisches Durchlaufen mehrerer vorgegebener oder zufälliger, sich ergänzender Beleuchtungsmuster aufgenommen werden.

In einem Schritt S6 wird das Bild der Probe 42 angezeigt und dem Benutzer des Fluoreszenzmikroskops 20 wird die Möglichkeit gegeben, Teilbereiche des Bildes der Probe 42 auszuwählen, beispielsweise mit einem Lightpen oder einer Computer-Maus.

In einem Schritt S8 kann eine Konfokalität des Fluoreszenzmikroskops 20 eingestellt werden. Die Konfokalität des Fluoreszenzmikroskops 20 wird eingestellt, indem festgelegt wird, wie viele der Detektorelemente je Teillichtstrahl 30 ausgewertet bzw. ausgelesen werden. dabei kann die höchste Konfokalität erzielt werden, indem lediglich eines der Detektorelemente ausgelesen wird, und zwar das, auf das der Schwerpunkt eines der Teilstrahlen 30 abgebildet ist. Beispielsweise wird in dem Schritt S8 eingestellt, dass jeder Lichtleitfaser 41 neun Detektorelemente zugeordnet sind.

In einem Schritt S 10 wird abhängig von den ausgewählten Teilbereichen 60, 62 das Anregungslicht 24 in die Teilstrahlen 30 aufgespaltet. Dazu werden genau die optischen Elemente 72 aktiviert, die nötig sind, um mit Hilfe der dadurch aufgespalteten Teilstrahlen 30 die zu den ausgewählten Teilbereichen 60, 62 entsprechenden Bereiche der Probe 42 auszuleuchten.

In einem Schritt S 12 werden die Teilstrahlen 30 auf die zu den ausgewählten Teilbereichen 60, 62 korrespondierende Bereiche der Probe 42 fokussiert.

In einem Schritt S 14 werden die Detektorelemente ausgelesen und deren Signale ausgewertet. Dabei werden vorzugsweise nur die Detektorelemente ausgelesen und/oder nur deren Signale auswertet, die den Lichtleitfasern 41 zugeordnet sind, die die Teilstrahlen hin zu der Probe 42 leiten und das Fluoreszenzlicht 44 zu den Detektorelementen 54 leiten.

In einem Schritt S 16 kann das Programm beendet werden. Vorzugsweise wird das Programm jedoch regelmäßig während des Betriebs des Fluoreszenzmikroskops 20 abgearbeitet, beispielsweise immer wenn eine neue Probe 42 untersucht werden soll oder wenn der Benutzer neue Teilbereiche der Probe 42 auswählt. Ferner kann das Programm auch zum gleichzeitigen Untersuchen mehrerer Proben 42 abgearbeitet werden.

Alternativ oder zusätzlich kann das Anregungslicht 24 in Form einzelner Pulse erzeugt werden und abhängig von dem gepulsten Anregen der Farbstoffpartikel kann die Detektion des Fluoreszenzlichts 44 erfolgen. Dies ermöglicht, das Fluoreszenzmikroskop 20 mit den Lichtleitfasern 38 für Fluorescence Lifetime Imaging Microscopy (FLIM) einzusetzen.

Einzelne mit Hilfe der Detektoren 52, 56 aufgenommene Bilder können zu einem Gesamtbild zusammengesetzt werden, wodurch ein größeres Beobachtungsfeld realisierbar ist. Ferner können auch die mit einzelnen Detektorelementen erfassten Daten zu einem großen Gesamtbild zusammengesetzt werden.

Die Erfindung ist nicht auf die angegebenen Ausführungsbeispiele beschränkt. Beispielsweise kann die Lichtquelle 22 ein LED-Array umfassen, die das Anregungslicht 24 in Form von Teilstrahlen 30 erzeugt, was ein Anordnen des optischen Stellelements 28 erübrigt, da dann die beliebige Anzahl der Foki 37 und/oder die beliebige Form der zu untersuchenden Bereiche der Probe 42 durch selektives An- und Ausschalten der einzelnen LED's erzielt werden kann. Ferner ist es möglich mehrere Teilstrahlen 30 gleichzeitig in eine der Lichtleitfasern 41 einzukoppeln, um ein besseres Signal/Rausch-Verhältnis zu erhalten. Das Fluoreszenzmikroskop 20 kann derart ausgestaltet sein, dass die Lichtleitfasern 41, insbesondere das Faserbündel 38, einfach austauschbar sind. Je nach Anwendungen können dann mehr oder weniger Lichtleitfasern 41 und/oder Lichtleitfasern 41 unterschiedlicher Beschaffenheit, beispielsweise mit unterschiedlicher Länge, Breite und/oder Material eingebaut werden. Zur 3D-Datenaufnahme können die Probe 42 oder die Lichtleitfasern 41 in z-Richtung, also parallel zu den aus den Lichtleitfasern 41 austretenden Teilstrahlen 30, verschoben werden, beispielsweise mit Hilfe von Piezoelementen, Stellmotoren, Luftdruckregelung, Hydraulikverstellung und/oder elektromechanische Verstelleinrichtungen. Ferner können alternativ zu den Lichtleitfasern 42 andere Lichtleiter vorgesehen sein.

### Bezugszeichenliste:

- 20: Fluoreszenzmikroskop
- 22: Lichtquelle
- 24: Anregungslicht
- 26: erste Kollimationslinse
- 27: erster Strahlteiler
- 28: optisches Stellelement
- 30: Teilstrahlen
- 31: zweiter Strahlteiler
- 32: erste Linse
- 33: Einkoppellinse
- 34: erste Faserenden
- 35: zweite Faserenden
- 36: Mikrolinsensystem
- 37: fokussierte Teilstrahlen
- 38: Faserbündel
- 40: Probenhalter
- 41 1: Lichtleitfasern
- 42: Probe
- 43: Objektiv
- 44: Fluoreszenzlicht
- 45: Koppelstück
- 46: zweite Linse
- 48: dritter Strahlteiler
- 50: erster Farbfilter
- 52: erster Detektor
- 54: zweiter Farbfilter
- 56: zweiter Detektor
- 58: Anzeigeeinheit
- 60: erster Teilbereich
- 62: zweiter Teilbereich
- 66: Mehrfachprobenhalter
- 72: optische Elemente
- 74: aktive optische Elemente
- 76: bereits beleuchtete Bereiche

- S2 - S16: Schritte zwei bis sechzehn

## Patentansprüche

1. Fluoreszenzmikroskop (20) zum Untersuchen mindestens einer Probe (42),
mit einer Lichtquelle (22), die Anregungslicht (24) erzeugt,
mehreren Detektorelementen zur Detektion von Fluoreszenzlicht (44), mehreren Lichtleitern (41), die das Anregungslicht (24) als Teilstrahlen (30) zu der Probe (42) leiten, welches Farbstoffpartikel der Probe (42) zum Fluoreszieren anregt, und die von der Probe (42) emittiertes Fluoreszenzlicht zu den Detektorelementen leiten,
und mit einer Fokussieroptik, die in Richtung der Teilstrahlen (30) zwischen den Lichtleitern (41) und der Probe (42) angeordnet ist,
wobei jedem Lichtleiter (41) mindestens ein Detektorelement zugeordnet ist.

2. Fluoreszenzmikroskop (20) nach Anspruch 1,
mit mehreren schaltbaren optischen Elementen (72), die jeweils einen ersten Schaltzustand und einen zweiten Schaltzustand haben und die das Anregungslicht (24) in die Teilstrahlen (30) aufspalten, wobei die optischen Elemente (72) im ersten Schaltzustand die Teilstrahlen (30) zu den Lichtleitern (41) lenken und wobei die optischen Elemente (72) im zweiten Schaltzustand die Teilstrahlen (30) nicht zu den Lichtleitern (41) lenken.

3. Fluoreszenzmikroskop (20) nach Anspruch 1,
mit mehreren schaltbaren optischen Elementen (72), die jeweils einen ersten Schaltzustand und einen zweiten Schaltzustand haben, wobei die optischen Elemente (72) im ersten Schaltzustand das Anregungslicht (24) in Teilstrahlen (30) aufteilen und zu den Lichtleitern (41) lenken, und wobei die optischen Elemente (72) im zweiten Schaltzustand das auf sie treffende Anregungslicht (24) absorbieren.

4. Fluoreszenzmikroskop (20) nach einem der vorstehenden Ansprüche, mit einer Fokussieroptik, die ein Objektiv (43) oder ein Mikrolinsensystem (36) umfasst, die die Teilstrahlen (30) in die Lichtleiter (41) einkoppeln und/oder die die Teilstrahlen (30) auf oder in der Probe (42) fokussieren.

5. Verfahren zum Untersuchen mindestens einer Probe (42) mit Hilfe eines Fluoreszenzmikroskops (20),
bei dem Anregungslicht (24) erzeugt wird,
das Anregungslicht (24) als Teilstrahlen (30) über Lichtleiter (41) zu der Probe (42) geleitet wird, wobei durch das Anregungslicht (24) Farbstoffpartikel der Probe (42) zum Fluoreszieren angeregt werden,
die Teilstrahlen (30) auf oder in der Probe (42) fokussiert werden,
jedem Lichtleiter (41) mindestens ein Detektorelement zugeordnet wird und bei dem von der Probe (42) emittiertes Fluoreszenzlicht (44) über die Lichtleiter (41) zu den Detektorelementen geleitet wird.

6. Verfahren nach Anspruch 5,
bei dem nur die Detektorelemente ausgelesen und/oder nur die Signale der Detektorelemente ausgewertet werden, auf die die Teilstrahlen (30) treffen.

7. Verfahren nach Anspruch 6,
bei dem eine Konfokalität des Fluoreszenzmikroskops (20) eingestellt wird, indem eine Anzahl der Detektorelemente eingestellt wird, die je Teillichtstrahl (30) ausgelesen oder ausgewertet werden.

8. Verfahren nach einem der Ansprüche 6 oder 7,
bei dem ein Bild der Probe (42) aufgenommen und auf einer Anzeigeeinheit angezeigt wird,
abhängig von einer Benutzereingabe ein Teilbereich des Bildes ausgewählt wird,
das Anregungslicht (24) so in die Teilstrahlen (30) aufgespaltet wird, dass Bereiche der Probe (42), die zu den Teilbereichen des Bildes der Probe (42) korrespondieren, mit Hilfe der Fokusse der Teilstrahlen (30) ausgeleuchtet werden.

9. Verfahren nach einem der Ansprüche 6 bis 8,
bei dem mehrere Proben (42) untersucht werden, indem zu jeder Probe (42) mindestens ein Teillichtstrahl (30) geführt und auf oder in der Probe (42) fokussiert wird.

10. Verfahren nach einem der Ansprüche 6 bis 9, bei dem Enden der Lichtleiter (41), die der oder den Proben (42) zugewandt sind, hin zu der bzw. den Proben (42) und/oder über die Probe(42) bzw. die Proben (42) geführt werden.

11. Verfahren nach Anspruch 10, bei dem eine Auflösung des Fluoreszenzmikroskops (20) durch das Führen der Enden der Lichtleiter (41) über die Probe (42) bzw. Proben (42) erhöht wird.

12. Verfahren nach einem der Ansprüche 6 bis 11, bei dem aufgrund der Teilstrahlen (30) auf oder in der Probe (42) ein regelmäßiges oder zufällig gewähltes Beleuchtungsmuster erzeugt wird.
